# EUROPEAN PATENT SPECIFICATION

(11) **EP 4 527 871 B1**
(45) Date of publication and mention of the grant of the patent: **01.07.2026**
(21) Application number: 23810908.6
(22) Date of filing: 17.05.2023
(51) Int. Cl.: C08G 63/16, C08G 63/78, C08L 67/02, A47G 21/18

(54) **POLYESTER, AND PREPARATION METHOD THEREFOR AND USE THEREOF**
POLYESTER UND HERSTELLUNGSVERFAHREN DAFÜR UND VERWENDUNG DAVON
POLYESTER, SON PROCÉDÉ DE PRÉPARATION ET UTILISATION ASSOCIÉE

(30) Priority: 24.05.2022 CN 202210569210
(43) Date of publication of application: 26.03.2025
(73) Proprietor: Zhuhai Kingfa Biomaterial Co., Ltd., Zhuhai, Guangdong 519050 (CN); Kingfa Sci. & Tech. Co., Ltd., Guangzhou, Guangdong 510663 (CN)
(72) Inventor: ZHANG, Chuanhui, Zhuhai, Guangdong 519050 (CN); CHEN, Pingxu, Zhuhai, Guangdong 519050 (CN); YE, Nanbiao, Zhuhai, Guangdong 519050 (CN); OUYANG, Chunping, Zhuhai, Guangdong 519050 (CN); MAI, Kaijin, Zhuhai, Guangdong 519050 (CN); DONG, Xueteng, Zhuhai, Guangdong 519050 (CN); ZENG, Xiangbin, Zhuhai, Guangdong 519050 (CN); LU, Changli, Zhuhai, Guangdong 519050 (CN)
(74) Representative: Petraz, Gilberto Luigi
(86) International application number: PCT/CN2023/094641
(87) International publication number: WO 2023/226835

(56) References cited:
- WO-A1-2006/001084
- CN-A- 109 369 893
- CN-A- 109 369 893
- CN-A- 113 683 763
- CN-A- 114 507 338
- CN-A- 114 957 628
- JP-A- 2004 107 457
- JP-A- 2010 209 268
- US-A- 5 880 224
- US-A1- 2018 237 583
- US-A1- 2018 237 583
- US-A1- 2020 362 101
- US-A1- 2020 362 103

## Description

### TECHNICAL FIELD

The present invention relates to the field of biodegradable polyesters, and specifically relates to a polyester having a low content of low-molecular-weight substances, and a preparation method therefor and use thereof.

### BACKGROUND

At present, thermoplastic aromatic polyesters, which have been widely used in industry and daily life, have excellent thermal stability and mechanical properties, and are convenient to process and low in price. For example, polyethylene terephthalate (PET) and polybutylene terephthalate (PBT) have been widely used in manufacturing of fibers, membranes, and containers. However, these aromatic polyesters are difficult to degrade after use and waste, and no obvious direct degradation of the aromatic polyesters, such as PET and PBT, by microorganisms has been observed so far.

As environmentally friendly plastics, aliphatic polyesters have been concerned. The aliphatic polyesters can be obtained by an esterification reaction and a melt polycondensation reaction of aliphatic dicarboxylic acids and aliphatic diols. The aliphatic dicarboxylic acids (such as succinic acid and adipic acid) in raw materials can be manufactured from glucose derived from plants by a fermentation method, and the aliphatic diols (such as ethylene glycol, propylene glycol, and butanediol) can also be manufactured from raw materials derived from plants, such that fossil fuel resources can be saved. Meanwhile, since the plants can absorb carbon dioxide in the atmosphere during growth, a great contribution to reducing carbon dioxide emissions can be made. Furthermore, it is also known that the aliphatic polyesters show excellent biodegradability and thus can be regarded as triply environmentally friendly plastics.

However, aliphatic polyester products often have the problems of precipitation of small molecules on surfaces, disappearance of glossiness and the like. In order to solve these problems, polyester particles are cleaned with acetone in JP2004107457A, and the polyester particles are cleaned with methanol or isopropanol, etc., in JP3396537B2. Although these methods can improve the glossiness of polyesters to a certain extent, additional multi-step processes are increased, and costs are increased. Moreover, on the one hand, these organic solvents may remain in the polyester particles to cause new small molecule problems. On the other hand, due to the use of alcohols, the problems of degradation of polyesters, decrease of molecular weights and the like may be caused. In CN101910245B, the glossiness of a polyester product is improved by controlling a wall surface temperature of a distillation tube of a polycondensation reactor and an internal temperature of the polycondensation reactor, but the improvement degree is still limited.

On the other hand, the aliphatic polyesters have large melt viscosity, and for injection molding of fine parts, the problems of short molding of melts and the like easily occur, such that improvement of the fluidity of the aliphatic polyesters has become an important topic for those skilled in the art.

CN 113 683 763 A discloses polyesters with low oligomer content.

### SUMMARY

In order to overcome the above deficiencies of the prior art, a purpose of the present invention is to provide a polyester. The polyester has a specific content of low-molecular-weight substances, not only is the problem of easy precipitation on surfaces of polyester products solved, but also a polyester product has high glossiness, and the fluidity of a polyester resin can be improved, such that the glossiness and fluidity of the product are maintained in a balanced state.

Another purpose of the present invention is to provide a preparation method for the polyester.

The above purposes of the present invention are achieved through the following technical solutions.

A polyester includes a repeating unit derived from the following components:
a first component A, based on a total molar amount of the first component A, including:
   a1) 81-100 mol%, preferably 90-100 mol% of succinic acid, or ester derivatives thereof or anhydride derivatives thereof;
   a2) 0-19 mol %, preferably 0-10 mol% of other binary carboxylic acids except for succinic acid, or ester derivatives thereof or anhydride derivatives thereof;
a second component B, 1,4-butanediol;
wherein based on a total weight of the polyester, a total content of low-molecular-weight substances in the polyester is 0.1-0.6 wt%, preferably 0.2-0.5 wt%, and a GPC curve of the low-molecular-weight substances has the following characteristic: an integral area of peaks having a number-average molecular weight (Mn) of greater than 400 is less than 60% of a total integral area.

The total content of the low-molecular-weight substances is tested by the following method:
taking 10 g of polyester particles, and recording a mass of the polyester particles as wg; placing the polyester particles in 100 ml of ethanol for heating and reflux for 4 h, performing filtration under heat to obtain a filtrate, pouring the filtrate into an evaporation dish weighed in advance, and recording a weight of the evaporation dish as a0; placing the obtained filtrate on a water bath for evaporation to nearly dry, transferring the evaporation dish into an oven for drying at 105°C for 2 h, then taking out the evaporation dish, performing weighing after cooling for 0.5 h, and recording a weight as a1; and obtaining the content of the low-molecular-weight substances as (a1-a0)/w×100%.

The low-molecular-weight substances in the polyester are cyclic esters produced in a synthesis process of the polyester, and mainly include cyclic dimers and cyclic polymers with a number of repeating units of greater than 2. In the present invention, by controlling the total content of the low-molecular-weight substances in the polyester to 0.1-0.6 wt% and the integral area of the peaks (cyclic polymers) having the number-average molecular weight (Mn) of greater than 400 to be less than 60% of the total integral area in the GPC curve of the low-molecular-weight substances, the fluidity of the polyester can be improved while reducing the problem of precipitation of the polyester, and a prepared polyester product has high glossiness and good fluidity. When the total content of the low-molecular-weight substances in the polyester is too high, the problem of serious precipitation in subsequent processing and use processes will be caused, and the glossiness is poor. When the total content of the low-molecular-weight substances is too low, effects of a flow modifier cannot be achieved, and improvement of the fluidity of the polyester is affected.

As a further technical solution of the present invention, the total content of the low-molecular-weight substances in the polyester is 0.2-0.35 wt%, and the GPC curve of the low-molecular-weight substances has the following characteristic: the integral area of the peaks having the number-average molecular weight (Mn) of greater than 400 is less than 50% of the total integral area.

Preferably, the first component A includes succinic acid, or ester derivatives thereof or anhydride derivatives thereof.

As a specific selection example, the component a2) is selected from one or more of oxalic acid, dimethyl oxalate, malonic acid, dimethyl malonate, methylsuccinic acid, glutaric acid, dimethyl glutarate, bis(2-hydroxyethyl) glutarate, bis(3-hydroxypropyl) glutarate, bis(4-hydroxybutyl) glutarate, 2-methylglutaric acid, 3-methylglutaric acid, adipic acid, dimethyl adipate, bis(2-hydroxyethyl) adipate, bis(3-hydroxypropyl) adipate, bis(4-hydroxybutyl) adipate, 3-methyladipic acid, 2,2,5,5-tetramethyladipic acid, pimelic acid, suberic acid, azelaic acid, dimethyl azelate, sebacic acid, 1,11-undecanedicarboxylic acid, 1,10-decanedicarboxylic acid, undecanedioic acid, 1,12-dodecanedicarboxylic acid, hexadecanedioic acid, eicosanedioic acid, tetracosanedioic acid, dimer acid, terephthalic acid, dimethyl terephthalate, bis(2-hydroxyethyl) terephthalate, bis(3-hydroxypropyl) terephthalate, bis(4-hydroxybutyl) terephthalate, isophthalic acid, dimethyl isophthalate, bis(2-hydroxyethyl) isophthalate, bis(3-hydroxypropyl) isophthalate, bis(4-hydroxybutyl) isophthalate, 2,6-naphthalenedicarboxylic acid, dimethyl 2,6-phthalate, 2,7-naphthalenedicarboxylic acid, dimethyl 2,7-phthalate, 3,4'-diphenyletherdicarboxylic acid, dimethyl 3,4'-diphenyletherdicarboxylate, 4,4'-diphenyletherdicarboxylic acid, dimethyl 4,4'-diphenyletherdicarboxylate, 3,4'-phenylthioetherdicarboxylic acid, dimethyl 3,4'-phenylthioetherdicarboxylate, 4,4'-diphenylthioetherdicarboxylic acid, dimethyl 4,4'-phenylthioetherdicarboxylate, 3,4'-diphenylsulfonedicarboxylic acid, dimethyl 3,4'-diphenylsulfonedicarboxylate, 4,4'-diphenylsulfonedicarboxylic acid, dimethyl 4,4'-diphenylsulfonedicarboxylate, 3,4'-benzophenonedicarboxylic acid, dimethyl 3,4'-benzophenonedicarboxylate, 4,4'-benzophenonedicarboxylic acid, dimethyl 4,4'-benzophenonedicarboxylate, 1,4-naphthalenedicarboxylic acid, dimethyl 1,4-naphthalenedicarboxylate, 4,4'-methylenebis(benzoic acid), 4,4'-methylenebis(dimethyl benzoate), or ester derivatives thereof or anhydride derivatives thereof, preferably selected from one or more of adipic acid, sebacic acid, 1,12-dodecanedicarboxylic acid, terephthalic acid, or ester derivatives thereof or anhydride derivatives thereof, more preferably selected from one or more of adipic acid, sebacic acid, terephthalic acid, or ester derivatives thereof or anhydride derivatives thereof, and most preferably adipic acid, terephthalic acid, or ester derivatives thereof or anhydride derivatives thereof.

In the present invention, when necessary, the polyester further includes a third component C, and the component C is a compound containing at least three functional groups, and is preferably selected from one or more of tartaric acid, citric acid, malic acid, fumaric acid, maleic acid, trimethylolpropane, trimethylolethane, pentaerythritol, polyether triol, glycerol, 1,3,5-benzenetricarboxylic acid, 1,2,4-benzenetricarboxylic acid, 1,2,4-benzenetricarboxylic anhydride, 1,2,4,5-benzenetetracarboxylic acid, or pyromellitic dianhydride, more preferably one or more of malic acid, citric acid, fumaric acid, maleic acid, or glycerol; and
preferably, based on the total molar amount of the first component A, a content of the third component C is 0.01-1.0 mol%, preferably 0.02-0.2 mol%.

In the present invention, when necessary, the polyester further includes a fourth component D, and the fourth component D is a chain extender.

The chain extender is selected from one or more of an isocyanate, an isocyanurate, a peroxide, an epoxide, oxazoline, oxazine, lactam, carbodiimide, and polycarbodiimide containing 2 or more than 2 functional groups, preferably an isocyanate containing 2 or more than 2 functional groups, and more preferably hexamethylene diisocyanate.

The isocyanate containing 2 or more than 2 functional groups may be an aromatic isocyanate or an aliphatic isocyanate, preferably an aromatic diisocyanate or an aliphatic diisocyanate. Preferably, the aromatic diisocyanate is preferably toluene 2,4-diisocyanate, toluene 2,6-diisocyanate, diphenylmethane 2,2'-diisocyanate, diphenylmethane 2,4'-diisocyanate, diphenylmethane 4,4'-diisocyanate, naphthalene 1,5-diisocyanate, or xylene diisocyanate. More preferably, the aromatic diisocyanate is diphenylmethane 2,2'-diisocyanate, diphenylmethane 2,4'-diisocyanate, or diphenylmethane 4,4'-diisocyanate.

Preferably, the aliphatic diisocyanate is preferably any linear or branched alkylene diisocyanate or cycloalkylene diisocyanate containing 2 to 20 carbon atoms. More preferably, the aliphatic diisocyanate is any linear or branched alkylene diisocyanate or cycloalkylene diisocyanate containing 3 to 12 carbon atoms. The aliphatic diisocyanate may be hexamethylene 1,6-diisocyanate, isophorone diisocyanate, or methylene bis(4-isocyanatocyclohexane). Most preferably, the aliphatic diisocyanate is hexamethylene 1,6-diisocyanate or isophorone diisocyanate.

The isocyanate containing 2 or more than 2 functional groups may also be tri(4-isocyanatophenyl)methane with three rings.

Preferably, the isocyanurate containing 2 or more than 2 functional groups is an aliphatic isocyanurate, and is selected from an alkylene diisocyanate or a cycloalkylene diisocyanate containing 2 to 20 carbon atoms, preferably 3 to 12 carbon atoms, such as isophorone diisocyanate or methylene bis(4-isocyanatocyclohexane). The alkylene diisocyanate may be a linear or branched compound. In particular, isocyanurates based on cyclic trimers, pentamers, or higher oligomers, of n-hexamethylene diisocyanates, such as hexamethylene 1,6-diisocyanate, are preferred.

Preferably, the peroxide containing 2 or more than 2 functional groups is preferably benzoyl peroxide, 1,1-di(tert-butylperoxy)-3,3,5-trimethylcyclohexane, 1,1-di(tert-butylperoxy)methylcyclododecane, n-butyl 4,4-di(butylperoxy)valerate, dicumyl peroxide, tert-butyl peroxybenzoate, dibutyl peroxide, α,α-di(tert-butylperoxy)diisopropylbenzene, 2,5-dimethyl-2,5-di(tert-butylperoxy)hexane, 2,5-dimethyl-2,5-di(tert-butylperoxy)hexan-3-acetylene, or tert-butylperoxy cumene.

Preferably, the epoxide containing 2 or more than 2 functional groups is preferably hydroquinone, diglycidyl ether, resorcinol diglycidyl ether, 1,6-hexadiol diglycidyl ether, hydrobisphenol A diglycidyl ether, diglycidyl terephthalate, diglycidyl tetrahydrophthalate, diglycidyl hexahydrophthalate, dimethyldiglycidyl phthalate, phenylene diglycidyl ether, ethylene diglycidyl ether, trimethylene diglycidyl ether, tetramethylene diglycidyl ether, hexamethylene diglycidyl ether, sorbitol diglycidyl ether, polyglycerol polyglycidyl ether, pentaerythritol polyglycidyl ether, diglycerol polyglycidyl ether, glycerol polyglycidyl ether, trimethylolpropane polyglycidyl ether, resorcinol diglycidyl ether, neopentyl glycol diglycidyl ether, ethylene glycol diglycidyl ether, diethylene glycol diglycidyl ether, polyethylene glycol diglycidyl ether, propylene glycol diglycidyl ether, dipropylene glycol diglycidyl ether, polypropylene glycol diglycidyl ether, or polybutylene glycol diglycidyl ether.

The epoxide containing 2 or more than 2 functional groups is also preferably a copolymer based on styrene, an acrylate, and/or a methacrylate, and containing an epoxy group, and the epoxy group is preferably glycidyl methacrylate. It has been proven that advantageous compounds are copolymers in which a proportion of the glycidyl methacrylate is higher than 20 wt%, more preferably higher than 30 wt%, and more preferably higher than 50 wt%. An equivalent weight of the epoxy group in these copolymers is preferably 150 to 3,000 g/eq., more preferably 200 to 500 g/eq. A weight-average molecular weight (Mw) of the copolymer is preferably 2,000 to 25,000, more preferably 3,000 to 8,000. A number-average molecular weight (Mn) of the copolymer is preferably 400 to 6,000, more preferably 1,000 to 4,000. A polydispersity index (Q=Mw/Mn) is preferably 1.5 to 5.

The oxazoline or oxazine containing 2 or more than 2 functional groups is preferably dioxazoline or dioxazine, and a bridging part is a single bond, (CH2)z-alkylene, wherein z is equal to 2, 3, or 4, such as methylene, ethyl-1,2-diyl, propyl-1,3-diyl, or propyl-1-2-diyl, or phenylene. Specifically, the dioxazoline is 2,2'-bis(2-oxazoline), bis(2-oxazolinyl)methane, 1,2-bis(2-oxazolinyl)ethane, 1,3-bis(2-oxazolinyl)propane, 1,4-bis(2-oxazolinyl)butane, 2,2'-bis(2-oxazoline), 2,2'-bis(4-methyl-2-oxazoline), 2,2'-bis(4,4'-dimethyl-2-oxazoline), 2,2'-bis(4-ethyl-2-oxazoline), 2,2'-bis(4,4'-diethyl-2-oxazoline), 2,2'-bis(4-propyl-2-oxazoline), 2,2'-bis(4-butyl-2-oxazoline), 2,2'-bis(4-hexyl-2-oxazoline), 2,2'-bis(4-phenyl-2-oxazoline), 2,2'-bis(4-cyclohexyl-2-oxazoline), 2,2'-bis(4-phenylmethyl-2-oxazoline), 2,2'-p-phenylenebis(4-methyl-2-oxazoline), 2,2'-p-phenylenebis(4,4'-dimethyl-2-oxazoline), 2,2'-m-phenylenebis(4-methyl-2-oxazoline), 2,2'-m-phenylenebis(4,4'-dimethyl-2-oxazoline), 2,2'-hexamethylenebis(2-oxazoline), 2,2'-octamethylenebis(2-oxazoline), 2,2'-decamethylenebis(2-oxazoline), 2,2'-ethylenebis(4-methyl-2-oxazoline), 2,2'-tetramethylenebis(4,4'-dimethyl-2-oxazoline), 2,2'-9,9'-diphenoxyethanebis(2-oxazoline), 2,2'-cyclohexylenebis(2-oxazoline), or 2,2'-diphenylene(2-oxazoline).

Specifically, the dioxazine is 2,2'-bis(2-dioxazine), bis(2-dioxazinyl)methane, 1,2-bis(2-dioxazinyl)ethane, 1,3-bis(2-dioxazinyl)propane, 1,4-bis(2-dioxazinyl)butane, 1,4-bis(2-dioxazinyl)benzene, 1,2-bis(2-dioxazinyl)benzene, or 1,3-bis(2-dioxazinyl)benzene.

The carbodiimide or polycarbodiimide containing 2 or more than 2 functional groups is preferably N,N'-di-2,6-diisopropylphenylcarbodiimide, N,N'-di-o-tolylcarbodiimide, N,N'-diphenylcarbodiimide, N,N'-dioctyldecylcarbodiimide, N,N'-di-2,6-dimethylphenylcarbodiimide, N-tolyl-N'-cyclohexylcarbodiimide, N,N'-di-2,6-di-tert-butylphenylcarbodiimide, N-tolyl-N'-phenylcarbodiimide, N,N'-di-p-nitrophenylcarbodiimide, N,N'-di-p-aminophenylcarbodiimide, N,N'-di-p-hydroxyphenylcarbodiimide, N,N'-dicyclohexylcarbodiimide, N,N'-di-p-tolylcarbodiimide, p-phenylene-bis(di-o-tolylcarbodiimide), p-phenylene-bis(dicyclohexylcarbodiimide), hexamethylene-bis(dicyclohexylcarbodiimide), 4,4'-dicyclohexylmethanecarbodiimide, ethylene-bis(diphenylcarbodiimide), N,N'-phenylmethyl-carbodiimide, N-octadecyl-N'-phenylcarbodiimide, N-benzyl-N'-phenylcarbodiimide, N-octadecyl-N'-tolylcarbodiimide, N-cyclohexyl-N'-tolylcarbodiimide, N-phenyl-N'-tolylcarbodiimide, N-benzyl-N'-tolylcarbodiimide, N,N'-di-o-ethylphenylcarbodiimide, N,N'-di-p-ethylphenylcarbodiimide, N,N'-di-o-isopropylphenylcarbodiimide, N,N'-di-p-isopropylphenylcarbodiimide, N,N'-di-o-isobutylphenylcarbodiimide, N,N'-di-p-isobutylphenylcarbodiimide, N,N'-di-2,6-diethylphenylcarbodiimide, N,N'-di-2-ethyl-6-isopropylphenylcarbodiimide, N,N'-di-2-isobutyl-6-isopropylphenylcarbodiimide, N,N'-di-2,4,6-trimethylphenylcarbodiimide, N,N'-di-2,4,6-triisopropylphenylcarbodiimide, N,N'-di-2,4,6-triisobutylphenylcarbodiimide, diisopropylcarbodiimide, dimethylcarbodiimide, diisobutylcarbodiimide, dioctylcarbodiimide, tert-butylisopropylcarbodiimide, di-β-naphthylcarbodiimide, or di-tert-butylcarbodiimide.

Preferably, based on the total molar amount of the first component A, a content of the fourth component D is 0.01-5.0 mol%.

Preferably, a viscosity of the polyester determined in a phenol/o-dichlorobenzene solution at a weight ratio of 1:1 under a constant-temperature water bath at 25±0.05°C as specified according to GB/T 17931-1999 is 100-350 ml/g.

The present invention further provides a preparation method for the polyester, including the following steps:
S1: mixing the first component A, the second component B, and a part of a catalyst, and performing heating in an esterification reactor to 180-260°C to carry out an esterification reaction for 1-4 h to obtain an esterification product AB;
S2: enabling the esterification product AB in Step S1 to undergo a primary polycondensation reaction at a reaction temperature of 200-240°C for a reaction time of 2-6 h to obtain a primary polycondensation product Pre-AB; and
S3: transferring the primary polycondensation product Pre-AB obtained in Step S2 and the remaining catalyst to a final polymerization reactor to carry out a continuous polycondensation reaction at a temperature of 210-270°C until a reaction product determined in a phenol/o-dichlorobenzene solution at a weight ratio of 1:1 under a constant-temperature water bath at 25±0.05°C as specified according to GB/T 17931-1999 reaches a viscosity of 100-350 ml/g.

Preferably, in Step S1, an addition amount of the second component, 1,4-butanediol, is usually 1.3-3.0 times (molar amount) of the first component A, a diacid, preferably 1.5-2.5 times (molar amount).

Preferably, in Step S1, during preparation of the esterification product AB, the catalyst that is 0.001-1% of the weight of the final polyester is added. Preferably, an addition amount of the catalyst is 0.02-0.2% of the weight of the final polyester. The addition amount of the catalyst in Step S1 is usually 10-40 wt% of a total use amount of the catalyst. By controlling the addition amount of the catalyst, a subsequent processing process can be more stable. Further, the catalyst may be a tin compound, an antimony compound, a cobalt compound, a lead compound, a zinc compound, an aluminum compound, or a titanium compound, more preferably a zinc compound, an aluminum compound, or a titanium compound, and most preferably a titanium compound. The titanium compound, for example, tetrabutyl orthotitanate or tetraisopropyl orthotitanate, has the advantage that a residual amount remaining in a product or a downstream product is less toxic compared with other compounds. Such property is particularly important in biodegradable polyesters, because the biodegradable polyesters go directly into the environment in the form of compost bags or mulching films.

In Step S2, the reaction temperature is preferably 210-230°C. In Step S2, an initial pressure is usually set at 0.1 to 0.5 bar, preferably 0.2 to 0.4 bar, and the pressure at the end of S2 is usually set at 5 to 200 mbar, more preferably 10 to 100 mbar.

According to a process of the present invention, by adding a specific content of the catalyst in a polycondensation stage in Step S3, polymerization of the cyclic esters into the linear high-molecular-weight polyester can be catalyzed in this stage, thereby effectively decreasing the content of the cyclic esters, especially decreasing the content of the cyclic polymers with the number of repeating units of greater than 2, such that the total content of the low-molecular-weight substances in the polyester is not greater than 0.6 wt%. Moreover, the integral area of the peaks (cyclic dimers) having the number-average molecular weight (Mn) of greater than 400 can be simultaneously controlled to be less than 60% of the total integral area in the GPC curve of the low-molecular-weight substances.

The research of the present invention shows that the addition amount of the catalyst in Step S3 directly affects the total content of the low-molecular-weight substances in the polyester, and when the addition amount of the catalyst in Step S3 is too small, the effect of effectively decreasing the total content of the low-molecular-weight substances cannot be achieved. Preferably, in Step S3, the addition amount of the catalyst is 60-90 wt% of the total use amount of the catalyst.

In Step S3, the reaction temperature of the continuous polycondensation is preferably 230-260°C. In Step S3, the initial pressure is usually controlled at 0.2 to 5 mbar, more preferably 0.5 to 3 mbar. A reaction time of the continuous polycondensation is preferably 2-7 h, more preferably 3-6 h. A content of carboxyl in the polyester after the reaction in S3 is preferably 20-60 mmol/kg.

When necessary, after completion of Step S3, Step S4 is performed: adding the polyester obtained in Step S3 into a twin-screw extruder, together with the chain extender as the fourth component D in an amount of 0.01-5.0 mol% (based on the total molar amount of the first component A), at a reaction temperature of 200-270°C for a residence time of 0.5-15 min to obtain a polyester, wherein the polyester determined in a phenol/o-dichlorobenzene solution at a weight ratio of 1:1 under a constant-temperature water bath at 25±0.05°C as specified according to GB/T 17931-1999 has a viscosity of 150-350 ml/g.

In another aspect, the present invention further provides a polyester molding composition, calculated by weight percentage, including the following components:
5-95 wt% of the polyester;
5-95 wt% of an additive and/or other polymers; and
   0-70 wt% of a reinforcing material and/or a filler.

As a specific selection, the additive and/or other polymers may include at least one or more components selected from aliphatic polyesters, polycaprolactones, starch, cellulose, polyhydroxyalkanoates, and polylactic acid.

In another aspect, the present invention further provides use of the polyester in preparation of compostable degradable products, and the compostable degradable products may include fibers, films, or containers, etc.

The present invention further provides use of the polyester in preparation of suction tubes.

Compared with the prior art, the present invention has the following beneficial effects.

The present invention provides a polyester. By controlling the total content of the low-molecular-weight substances in the polyester to 0.1-0.6 wt% and the integral area of the peaks having the number-average molecular weight (Mn) of greater than 400 to be less than 60% of the total integral area in the GPC curve of the low-molecular-weight substances, not only can the problem of easy precipitation on surfaces of polyester products be solved, but also a prepared polyester product has high glossiness, and the fluidity of a polyester resin can be improved, such that the glossiness and fluidity of the product are maintained in a balanced state.

### BRIEF DESCRIPTION OF DRAWINGS

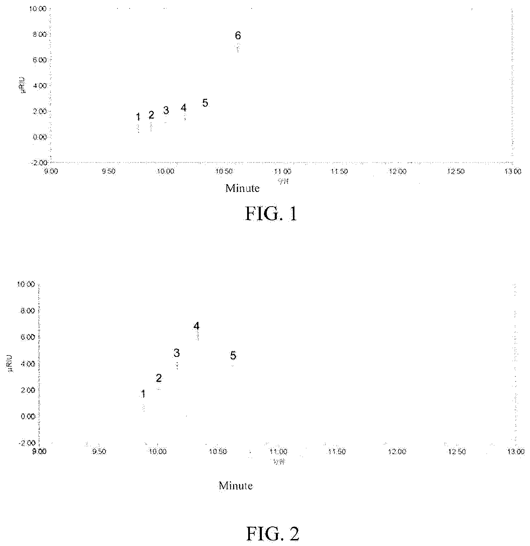

FIG. 1 shows a GPC curve of low-molecular-weight substances in Example 1 of the present invention.
FIG. 2 shows a GPC curve of low-molecular-weight substances in Comparative Example 1 of the present invention.

### DETAILED DESCRIPTION OF EMBODIMENTS

Unless otherwise specified, raw materials, reagents, and solvents used in the present invention are all purchased commercially without any treatment. The present invention is further described in detail below in conjunction with examples, but embodiments of the present invention are not limited by the following examples, and any other changes, modifications, substitutions, combinations, and simplifications that are made without departing from the spiritual essence and principles of the present invention shall be regarded as equivalent replacement modes and are all included in the scope of protection of the present invention. In addition, "part" and "%" used in the description, unless otherwise specified, represent "mass part" and "mass%", respectively.

The raw materials used in the examples and comparative examples of the present invention are all purchased from the market.

### Test methods:

### Viscosity of a polyester:

As specified according to GB/T 17931-1999, determination was carried out in a phenol/o-dichlorobenzene solution at a weight ratio of 1:1 under a constant-temperature water bath at 25±0.05°C, and a sample concentration was 5 mg/ml.

### Content of low-molecular-weight substances:

About 10 g of polyester particles were taken, and a mass of the polyester particles was recorded as wg; the polyester particles were placed in 100 ml of ethanol for heating and reflux for 4 h, filtration was performed under heat to obtain a filtrate, and the filtrate was poured into an evaporation dish (recorded as a0) weighed in advance; the obtained filtrate was placed on a water bath for evaporation to nearly dry, the evaporation dish was transferred into an oven for drying at 105°C for 2 h, and then the evaporation dish was taken out, cooled for 0.5 h, and weighed (recorded as a1); and the content of low-molecular-weight substances was obtained as (a1-a0)/w×100%.

### GPC test of low-molecular-weight substances:

GPC was tested by ACQUITY APC^{™} equipment of Waters at a test temperature of 40°C, XT45, XT200 and XT459 chromatographic columns were used, tetrahydrofuran was used as a solvent, and a flow rate of a mobile phase was 0.5 mL/min. A polystyrene standard substance was used as a standard sample. About 10 g of polyester particles were placed in 100 ml of ethanol for heating and reflux for 4 h, filtration was performed under heat to obtain a filtrate, the filtrate was poured into an evaporation dish and then placed on a water bath for evaporation to nearly dry, the evaporation dish was transferred into an oven for drying at 105°C for 2 h, and then the evaporation dish was taken out and cooled for 0.5 h. Substances in the evaporation dish were low-molecular-weight substances, and the low-molecular-weight substances were prepared into a solution of about 0.5 mg/mL for testing.

### Glossiness test:

After drying at 80°C for 5 h, polyester particles were subjected to injection molding at 160°C to obtain a 100*100*2 mm square plate, and then an L value of the square plate was tested by an X-Rite Color Eye 7000A desktop spectrophotometer. The larger L value indicates higher glossiness.

### MFR:

With reference to GB/T 3682.1-2018 Plastics-Determination of the melt mass-flow rate (MFR) and melt volume-flow rate (MVR) of thermoplastics-Part 1: Standard method, the melt flow rate (MRF) of a polyester was tested. A test temperature was 190°C, a load was 2.16 kg, and a melting time was 5 min.

### Example 1

S1: 800 kg/h of butanedioic acid (succinic acid), 1,038 kg/h of 1,4-butanediol, 0.93 kg/h of glycerol, and 0.104 kg/h of tetrabutyl orthotitanate were physically mixed in an esterification reactor at normal temperature, and then a mixture was enabled to undergo an esterification reaction at 200°C for 60-120 min to obtain an esterification product AB.

S2: The esterification product AB was passed through a static mixer and then entered a vertical stirring and full-mixing reactor at an initial pressure of 0.3 bar, heating was performed to 220°C for a reaction time of 3-5 h, the pressure was decreased to 100 mbar, and most of the excess 1,4-butandiol was removed by distillation to obtain a prepolymerization product Pre-AB.

S3: The prepolymerization product Pre-AB and 0.587 kg/h of tetrabutyl orthotitanate were transferred into a final polymerization reactor for further polycondensation at a temperature of 240°C and a pressure of 1 mbar for 3-5 h, and the remaining excess 1,4-butandiol and other byproducts were removed by distillation. Then, a polyester was granulated by an underwater granulator, and then dried to obtain a final polyester product. Integral proportions of various peaks in a GPC curve of low-molecular-weight substances are shown in Table 1, and performance results are shown in Table 3.

**Table 1 Integral proportions of various peaks in a GPC curve**

| Peak | Mn | Integral proportion/% |
|---|---|---|
| 1 | 1420 | 4.36 |
| 2 | 1100 | 5.41 |
| 3 | 856 | 7.95 |
| 4 | 622 | 10.95 |
| 5 | 430 | 15.38 |
| 6 | 325 | 55.95 |

### Example 2

S1: 800 kg/h of butanedioic acid, 1,038 kg/h of 1,4-butanediol, 0.93 kg/h of glycerol, and 0.207 kg/h of tetrabutyl orthotitanate were physically mixed in an esterification reactor at normal temperature, and then a mixture was enabled to undergo an esterification reaction at 200°C for 60-120 min to obtain an esterification product AB.

S2: The esterification product AB was passed through a static mixer and then entered a vertical stirring and full-mixing reactor at an initial pressure of 0.3 bar, heating was performed to 220°C for a reaction time of 3-5 h, the pressure was decreased to 100 mbar, and most of the excess 1,4-butandiol was removed by distillation to obtain a prepolymerization product Pre-AB.

S3: The prepolymerization product Pre-AB and 0.483 kg/h of tetrabutyl orthotitanate were transferred into a final polymerization reactor for further polycondensation at a temperature of 240°C and a pressure of 1 mbar for 3-5 h, and the remaining excess 1,4-butandiol and other byproducts were removed by distillation. Then, a polyester was granulated by an underwater granulator, and then dried to obtain a final polyester product. Performance results are shown in Table 3.

### Example 3

S1: 800 kg/h of butanedioic acid, 1,038 kg/h of 1,4-butanediol, 0.93 kg/h of glycerol, and 0.207 kg/h of tetrabutyl orthotitanate were physically mixed in an esterification reactor at normal temperature, and then a mixture was enabled to undergo an esterification reaction at 200°C for 60-120 min to obtain an esterification product AB.

S2: The esterification product AB was passed through a static mixer and then entered a vertical stirring and full-mixing reactor at an initial pressure of 0.3 bar, heating was performed to 220°C for a reaction time of 3-5 h, the pressure was decreased to 100 mbar, and most of the excess 1,4-butandiol was removed by distillation to obtain a prepolymerization product Pre-AB.

S3: The prepolymerization product Pre-AB and 0.483 kg/h of tetrabutyl orthotitanate were transferred into a final polymerization reactor for further polycondensation at a temperature of 240°C and a pressure of 1 mbar for 3-5 h, and the remaining excess 1,4-butandiol and other byproducts were removed by distillation to obtain a final polymer Poly-AB.

S4: The final polymer Poly-AB was continuously fed into a twin-screw extruder, meanwhile 6.3 kg/h of hexamethylene diisocyanate (HDI) was added by dose, and a temperature was set at 240°C. After a residence time of 3 min, a polyester was granulated by an underwater granulator, and then dried to obtain a final polyester product. Performance results are shown in Table 3.

### Example 4

Tetraisopropyl orthotitanate was used as a catalyst, an addition amount of the catalyst in Step S1 was 0.087 kg/h, and an addition amount of the catalyst in Step S3 was 0.490 kg/h.

Others were the same as those in Example 1. Performance results are shown in Table 3.

### Example 5

S1: 800 kg/h of butanedioic acid, 855 kg/h of 1,4-butanediol, 0.93 kg/h of glycerol, and 0.207 kg/h of tetrabutyl orthotitanate were physically mixed in an esterification reactor at normal temperature, and then a mixture was enabled to undergo an esterification reaction at 200°C for 60-120 min to obtain an esterification product AB.

S2: The esterification product AB was passed through a static mixer and then entered a vertical stirring and full-mixing reactor at an initial pressure of 0.3 bar, heating was performed to 220°C for a reaction time of 3-5 h, the pressure was decreased to 100 mbar, and most of the excess 1,4-butandiol was removed by distillation to obtain a prepolymerization product Pre-AB.

S3: The prepolymerization product Pre-AB and 0.483 kg/h of tetrabutyl orthotitanate were transferred into a final polymerization reactor for further polycondensation at a temperature of 240°C and a pressure of 1 mbar for 3-5 h, and the remaining excess 1,4-butandiol and other byproducts were removed by distillation. Then, a polyester was granulated by an underwater granulator, and then dried to obtain a final polyester product. Performance results are shown in Table 3.

### Example 6

S1: 800 kg/h of butanedioic acid, 1,526 kg/h of 1,4-butanediol, 0.93 kg/h of glycerol, and 0.207 kg/h of tetrabutyl orthotitanate were physically mixed in an esterification reactor at normal temperature, and then a mixture was enabled to undergo an esterification reaction at 200°C for 60-120 min to obtain an esterification product AB.

S2: The esterification product AB was passed through a static mixer and then entered a vertical stirring and full-mixing reactor at an initial pressure of 0.3 bar, heating was performed to 220°C for a reaction time of 3-5 h, the pressure was decreased to 100 mbar, and most of the excess 1,4-butandiol was removed by distillation to obtain a prepolymerization product Pre-AB.

S3: The prepolymerization product Pre-AB and 0.483 kg/h of tetrabutyl orthotitanate were transferred into a final polymerization reactor for further polycondensation at a temperature of 240°C and a pressure of 1 mbar for 3-5 h, and the remaining excess 1,4-butandiol and other byproducts were removed by distillation. Then, a polyester was granulated by an underwater granulator, and then dried to obtain a final polyester product. Performance results are shown in Table 3.

### Example 7

An addition amount of a catalyst in Step S1 was 0.242 kg/h, and an addition amount of the catalyst in Step S3 was 0.449 kg/h.

Others were the same as those in Example 5. Performance results are shown in Table 3.

### Comparative Example 1

S1: 800 kg/h of butanedioic acid, 1,038 kg/h of 1,4-butanediol, 0.93 kg/h of glycerol, and 0.449 kg/h of tetrabutyl orthotitanate were physically mixed in an esterification reactor at normal temperature, and then a mixture was enabled to undergo an esterification reaction at 200°C for 60-120 min to obtain an esterification product AB.

S2: The esterification product AB was passed through a static mixer and then entered a vertical stirring and full-mixing reactor at an initial pressure of 0.3 bar, heating was performed to 220°C, 0.242 kg/h of tetrabutyl orthotitanate was added to the reactor for a reaction time of 3-5 h, the pressure was decreased to 100 mbar, and most of the excess 1,4-butandiol was removed by distillation to obtain a prepolymerization product Pre-AB.

S3: The prepolymerization product Pre-AB was transferred into a final polymerization reactor for further polycondensation at a temperature of 240°C and a pressure of 1 mbar for 3-5 h, and the remaining excess 1,4-butandiol and other byproducts were removed by distillation. Then, a polyester was granulated by an underwater granulator, and then dried to obtain a final polyester product. Integral proportions of various peaks in a GPC curve of low-molecular-weight substances are shown in Table 2, and performance results are shown in Table 3.

**Table 2 Integral proportions of various peaks in a GPC curve**

| Peak | Mn | Integral proportion/% |
|---|---|---|
| 1 | 1172 | 3.55 |
| 2 | 868 | 11.66 |
| 3 | 626 | 23.21 |
| 4 | 429 | 39.33 |
| 5 | 326 | 22.25 |

### Comparative Example 2

A PBS resin obtained in Comparative Example 1 was subjected to solvent extraction operation by an ultrasonic countercurrent extraction machine (ND-400, produced by Jiangsu Huatai Heavy Industry Equipment Co., Ltd.). Key process parameters are as follows:
a feed capacity: 500 kg/h;
a solvent: ethanol/water at a volume ratio of 80/20;
an extraction temperature: 70°C; and
a residence time: 2.5 h.

After discharging, drying and cooling were performed to obtain a PBS resin with a low content of low-molecular-substances, and the resin was detected to have an ethanol content of 70 ppm.

Test method: 1.2000±0.0200 g of a sample was weighed, added into a sample flask, subjected to quantification by using an Agilent 7697A-7890A static headspace chromatograph as test equipment, and expressed in ppm relative to a mass of the sample. Static headspace conditions are as follows: 105°C for 2 h. A chromatographic column was J&W 122-7032: 250°C: 30 m*250 µm*0.25 µm. A GC heating procedure was as follows: an initial value: 50°C, and a retention time: 3 min; and heating to 200°C at a heating rate of 12°C/min, and a retention time: 4 min.

### Comparative Example 3

S1: 800 kg/h of butanedioic acid, 1,038 kg/h of 1,4-butanediol, 0.93 kg/h of glycerol, and 0.207 kg/h of tetrabutyl orthotitanate were physically mixed in an esterification reactor at normal temperature, and then a mixture was enabled to undergo an esterification reaction at 200°C for 60-120 min to obtain an esterification product AB.

S2: The esterification product AB was passed through a static mixer and then entered a vertical stirring and full-mixing reactor at an initial pressure of 0.3 bar, heating was performed to 220°C, 0.483 kg/h of tetrabutyl orthotitanate was added to the reactor for a reaction time of 3-5 h, the pressure was decreased to 100 mbar, and most of the excess 1,4-butandiol was removed by distillation to obtain a prepolymerization product Pre-AB.

S3: The prepolymerization product Pre-AB was transferred into a final polymerization reactor for further polycondensation at a temperature of 240°C and a pressure of 1 mbar for 3-5 h, and the remaining excess 1,4-butandiol and other byproducts were removed by distillation. Then, a polyester was granulated by an underwater granulator, and then dried to obtain a final polyester product. Performance results are shown in Table 3.

### Comparative Example 4

With reference to a polymerization process in Example 1 of CN101910245B, the following experiment was carried out:
S1: 800 kg/h of butanedioic acid, 916 kg/h of 1,4-butanediol, and 3.0 kg/h of malic acid were physically mixed in an esterification reactor at normal temperature, and then a mixture was enabled to undergo an esterification reaction at 200°C for 60-120 min to obtain an esterification product AB.
S2: The esterification product AB was passed through a static mixer and then entered a vertical stirring and full-mixing reactor at an initial pressure of 0.3 bar, heating was performed to 220°C, 0.46 kg/h of tetrabutyl orthotitanate was added to the reactor for a reaction time of 3-5 h, the pressure was decreased to 100 mbar, and most of the excess 1,4-butandiol was removed by distillation to obtain a prepolymerization product Pre-AB.
S3: The prepolymerization product Pre-AB was transferred into a final polymerization reactor for further polycondensation at a temperature (internal temperature t2 of the reactor) of 240°C and a pressure of 1 mbar for 3-5 h, and the remaining excess 1,4-butandiol and other byproducts were removed by distillation, wherein a wall surface temperature T of a distillate tube was 200°C. After condensation, a distillate was fed to the esterification reactor at a rate of 4.2 kg/h through a pipe insulated by a hot medium jacket (130°C). Then, a polyester was granulated by an underwater granulator, and then dried to obtain a final polyester product. Performance results are shown in Table 3.

### Comparative Example 5

S1: 800 kg/h of butanedioic acid, 1,038 kg/h of 1,4-butanediol, 0.93 kg/h of glycerol, and 0.449 kg/h of tetrabutyl orthotitanate were physically mixed in an esterification reactor at normal temperature, and then a mixture was enabled to undergo an esterification reaction at 200°C for 60-120 min to obtain an esterification product AB.

S2: The esterification product AB was passed through a static mixer and then entered a vertical stirring and full-mixing reactor at an initial pressure of 0.3 bar, heating was performed to 220°C for a reaction time of 3-5 h, the pressure was decreased to 100 mbar, and most of the excess 1,4-butandiol was removed by distillation to obtain a prepolymerization product Pre-AB.

S3: The prepolymerization product Pre-AB and 0.242 kg/h of tetrabutyl orthotitanate were transferred into a final polymerization reactor for further polycondensation at a temperature of 240°C and a pressure of 1 mbar for 3-5 h, and the remaining excess 1,4-butandiol and other byproducts were removed by distillation. Then, a polyester was granulated by an underwater granulator, and then dried to obtain a final polyester product. Performance results are shown in Table 3.

**Table 3 Performance results**

| | | Examp le 1 | Exam ple 2 | Exampl e 3 | Comp arative Exam ple 1 | Compa rative Exampl e 2 | Compar ative Exampl e 3 |
|---|---|---|---|---|---|---|---|
| Addition weight proportion of a catalyst/% | Step S1 | 15 | 30 | 30 | 65 | | 30 |
| | Step S2 | | | | 35 | | 70 |
| | Step S3 | 85 | 70 | 70 | | | |
| Third component C | | Glycer ol | Glyc erol | Glycer ol | Glycer ol | | Glycerol |
| HDI | | No | No | Yes | No | | No |
| Characteris tics of a product | Viscosity/ml/g | 146 | 159 | 192 | 168 | 161 | 161 |
| | Total content of low-molecular-weight substances/wt% | 0.23 | 0.35 | 0.33 | 0.78 | 0.05 | 0.76 |
| | Proportion of an integral area of peaks having a number-average molecular weight (Mn) of greater than 400 to a total integral area in a GPC curve | 44 | 47 | 46 | 78 | 71 | 79 |
| Glossiness | L | 83 | 82 | 82 | 65 | 80 | 66 |
| MFR/g/10min | | 9.3 | 9.2 | 8.4 | 10.1 | 6.3 | 9.8 |

**Continued Table 3**

| | | Exampl e 4 | Exampl e 5 | Exampl e 6 | Exampl e 7 | Compa rative Exampl e 4 | Compa rative Exampl e 5 |
|---|---|---|---|---|---|---|---|
| Addition weight proportion of a catalyst/% | Step S1 | 15 | 30 | 30 | 35 | | 65 |
| | Step S2 | | | | | 100 | |
| | Step S3 | 85 | 70 | 70 | 65 | | 35 |
| Third component C | | Glycer ol | Glycer ol | Glycer ol | Glycer ol | Malic acid | Glycer ol |
| HDI | | No | No | No | No | No | No |
| Characteristics of a product | Viscosity/ml/g | 147 | 137 | 163 | 135 | 162 | 165 |
| | Total content of low-molecular-weight substances/wt% | 0.25 | 0.44 | 0.32 | 0.50 | 0.51 | 0.66 |
| | Proportion of an integral area of peaks having a number-average molecular weight (Mn) of greater than 400 to a total integral area in a GPC curve | 49 | 48 | 44 | 52 | 75 | 64 |
| Glossiness | L | 81 | 80 | 82 | 79 | 68 | 69 |
| MFR/g/10min | | 9.5 | 10.6 | 9.1 | 10.6 | 9.9 | 10.3 |

As can be seen from the results in Table 3, in Examples 1-7 of the present invention, by controlling the total content of low-molecular-weight substances to 0.1-0.6 wt% and controlling the integral area of parts (cyclic polymers) having a number-average molecular weight of greater than 400 to be less than 60% of a total integral area in a GPC curve of the low-molecular-weight substances, the glossiness (L) of the prepared polyester products can reach 79 or above, the glossiness is high, and the fluidity is good, such that the glossiness and the fluidity are maintained in a balanced state.

In Comparative Example 1 or 3, by using a traditional catalyst addition process of adding all of the catalyst in Steps S1 and S2, the content of low-molecular-weight substances cannot be effectively decreased, and the total content of the low-molecular-weight substances in the prepared polyesters and the integrated area of parts (cyclic polymers) having a number-average molecular weight of greater than 400 in a GPC curve of the low-molecular-weight substances are not within the scope of the present invention. Although the fluidity is good, the glossiness of the obtained polyester products is poor, such that a balance between the fluidity and the glossiness cannot be achieved.

In Comparative Example 2, by using an ethanol/water mixed solvent to clean the PBS resin obtained in Comparative Example 1, the total content of low-molecular-weight substances can be effectively decreased, but the content of the low-molecular-weight substances is too low, and the fluidity of the product is poor, such that a balance between the fluidity and the glossiness cannot be achieved. Moreover, the resin contains more ethanol, which causes secondary pollution.

In Comparative Example 4, by referring to the polymerization process in Example 1 of CN101910245B and controlling the temperature of a relevant equipment process of the final polymerization reactor, the total content of low-molecular-weight substances in the prepared polyester is controlled to 0.51%. However, since such process control mainly solves cyclic dimers and is relatively limited to decrease cyclic polymers and the integral area of parts (cyclic polymers) having a number-average molecular weight of greater than 400 in a GPC curve of the low-molecular-weight substances is also not within the scope of the present invention, the glossiness of the obtained polyester product is also poor.

In Comparative Example 5, the total content of low-molecular-weight substances and the integrated area of parts (cyclic polymers) having a number-average molecular weight of greater than 400 in a GPC curve are both high, and the glossiness of the obtained polyester product is also poor, such that a balance between the fluidity and the glossiness cannot be achieved.

As can be seen from the results of Example 1-7 and Comparative Examples 1-5, the prepared polyester products cannot simultaneously meet the conditions that the total content of low-molecular-weight substances is in a range of 0.1-0.6 wt% and the proportion of the integral area of peaks having a number-average molecular weight (Mn) of greater than 400 to the total integral area in a GPC curve is less than 60%, such that the glossiness and fluidity of the obtained polyester products cannot be balanced.

## Claims

1. A polyester, comprising a repeating unit derived from the following components:
a first component A, based on a total molar amount of the first component A, comprising:
a1) 81-100 mol%, preferably 90-100 mol% of succinic acid, or ester derivatives thereof or anhydride derivatives thereof;
a2) 0-19 mol %, preferably 0-10 mol% of other binary carboxylic acids except for succinic acid, or ester derivatives thereof or anhydride derivatives thereof;
a second component B, 1,4-butanediol;
**characterized in that** based on a total weight of the polyester, a total content of low-molecular-weight substances in the polyester is 0.1-0.6 wt%, preferably 0.2-0.5 wt%, and a GPC curve of the low-molecular-weight substances has the following characteristic: an integral area of peaks having a number-average molecular weight (Mn) of greater than 400 is less than 60% of a total integral area and wherein the GPC measurement is performed according to the method defined in the specification; and
the total content of the low-molecular-weight substances is tested by the following method:
weighing 10 g of polyester particles, and recording a mass of the polyester particles as wg; placing the polyester particles in 100 ml of ethanol for heating and reflux for 4 h, performing filtration under heat to obtain a filtrate, pouring the filtrate into an evaporation dish weighed in advance, and recording a weight of the evaporation dish as a0; placing the obtained filtrate on a water bath for evaporation to nearly dry, transferring the evaporation dish into an oven for drying at 105°C for 2 h, then taking out the evaporation dish, performing weighing after cooling for 0.5 h, and recording a weight as a1; and obtaining the content of the low-molecular-weight substances as (a1-a0)/w×100%.

2. The polyester according to claim 1, **characterized in that** the total content of the low-molecular-weight substances in the polyester is 0.2-0.35 wt%, and the GPC curve of the low-molecular-weight substances has the following characteristic: the integral area of the peaks having the number-average molecular weight (Mn) of greater than 400 is less than 50% of the total integral area.

3. The polyester according to claim 1, **characterized in that** the first component A comprises succinic acid, or ester derivatives thereof or anhydride derivatives thereof.

4. The polyester according to claim 1, **characterized in that** the polyester further comprises a third component C, and the component C is a compound containing at least three functional groups; and based on the total molar amount of the first component A, a content of the third component C is 0.01-1.0 mol%, preferably 0.02-0.2 mol%.

5. The polyester according to claim 4, **characterized in that** the component C is selected from one or more of tartaric acid, citric acid, malic acid, fumaric acid, maleic acid, trimethylolpropane, trimethylolethane, pentaerythritol, polyether triol, glycerol, 1,3,5-benzenetricarboxylic acid, 1,2,4-benzenetricarboxylic acid, 1,2,4-benzenetricarboxylic anhydride, 1,2,4,5-benzenetetracarboxylic acid, or pyromellitic dianhydride, preferably one or more of malic acid, citric acid, fumaric acid, maleic acid, or glycerol.

6. The polyester according to claim 1, **characterized in that** the polyester further comprises a fourth component D, and the fourth component D is a chain extender; and based on the total molar amount of the first component A, a content of the fourth component D is 0.01-5.0 mol%.

7. The polyester according to claim 6, **characterized in that** the fourth component D is selected from one or more of an isocyanate, an isocyanurate, a peroxide, an epoxide, oxazoline, oxazine, lactam, carbodiimide, and polycarbodiimide containing 2 or more than 2 functional groups, preferably an isocyanate containing 2 or more than 2 functional groups, and more preferably hexamethylene diisocyanate.

8. The polyester according to claim 1, **characterized in that** a viscosity of the polyester determined in a phenol/o-dichlorobenzene solution at a weight ratio of 1:1 under a constant-temperature water bath at 25±0.05°C as specified according to GB/T 17931-1999 is 100-350 ml/g.

9. A preparation method for the polyester according to any one of claims 1-8, **characterized in that** the preparation method comprises the following steps: S1: mixing the first component A, the second component B, and a part of a catalyst, and performing heating in an esterification reactor to 180-260°C to carry out an esterification reaction for 1-4 h to obtain an esterification product AB;
S2: enabling the esterification product AB in Step S1 to undergo a primary polycondensation reaction at a reaction temperature of 200-240°C for a reaction time of 2-6 h to obtain a primary polycondensation product Pre-AB; and
S3: transferring the primary polycondensation product Pre-AB obtained in Step S2 and the remaining catalyst to a final polymerization reactor to carry out a continuous polycondensation reaction at a temperature of 210-270°C until a reaction product determined in a phenol/o-dichlorobenzene solution at a weight ratio of 1:1 under a constant-temperature water bath at 25±0.05°C as specified according to GB/T 17931-1999 reaches a viscosity of 100-350 ml/g;
wherein an addition amount of the catalyst in Step S1 is 10-40 wt% of a total use amount of the catalyst, and an addition amount of the catalyst in Step S3 is 60-90 wt% of the total use amount of the catalyst.

10. The preparation method for the polyester according to claim 9, **characterized in that** the catalyst comprises one or more of a tin compound, an antimony compound, a cobalt compound, a lead compound, a zinc compound, an aluminum compound, or a titanium compound, preferably one or more of a zinc compound, an aluminum compound, or a titanium compound, and more preferably tetrabutyl orthotitanate and/or tetraisopropyl orthotitanate.

11. A polyester molding composition, **characterized in that** calculated by weight percentage, the polyester molding composition comprises the following components:
5-95 wt% of the polyester according to any one of claims 1-8;
5-95 wt% of an additive and/or other polymers; and
0-70 wt% of a reinforcing material and/or a filler.

12. Use of the polyester according to any one of claims 1-8 in preparation of compostable degradable products, **characterized in that** the compostable degradable products comprise fibers, films, or containers.

13. Use of the polyester according to any one of claims 1-8 in preparation of suction tubes.

## Patentansprüche

1. Polyester, umfassend eine Wiederholungseinheit, die von den folgenden Komponenten abgeleitet ist:
einer ersten Komponente A, basierend auf einer gesamten Molarmenge der ersten Komponente A, umfassend:
a1) 81-100 Mol-%, vorzugsweise 90-100 Mol-% von Succinylsäure, oder Esterderivaten davon oder Anhydridderivaten davon;
a2) 0-19 Mol-%, vorzugsweise 0-10 Mol-% von anderen binären Carbonsäuren mit Ausnahme von Succinylsäure, oder Esterderivaten davon oder Anhydridderivaten davon;
einer zweiten Komponente B, 1,4-Butandiol;
**dadurch gekennzeichnet, dass**, aufgrund eines Gesamtgewichts des Polyesters, ein Gesamtgehalt von Stoffen mit niedrigem Molekulargewicht im Polyester 0.1-0.6 Gew.-%, vorzugsweise 0.2-0.5 Gew.-% beträgt, und eine GPC-Kurve der Stoffe mit niedrigem Molekulargewicht das folgende Merkmal hat: eine integrale Fläche von Peaks, die ein zahlenmittleres Molekulargewicht (Mn) größer als 400 haben, weniger ist als 60% einer gesamten integralen Fläche und worin die GPC-Messung nach dem Verfahren durchgeführt wird, das in der Spezifikation definiert ist; und
der Gesamtgehalt der Stoffe mit niedrigem Molekulargewicht durch das folgende Verfahren getestet wird:
Wiegen von 10 g von Polyesterpartikeln, und Aufzeichnen einer Masse der Polyesterpartikel als wg; Setzen der Polyesterpartikel in 100 ml von Ethanol zur Heizung und zum Rückfluss für 4 Stunden, Durchführen von Filtrierung unter Hitze, um ein Filtrat zu erhalten, Gießen des Filtrats in eine Verdampfungsschale, die vorab gewogen wird, und Aufzeichnen eines Gewichts der Verdampfungsschale als a0; Setzen des erhaltenen Filtrats auf ein Wasserbad zur Verdampfung, damit es beinahe trocknet, Überführen der Verdampfungsschale in einen Ofen zum Trocknen bei 105°C für 2 Stunden, dann Herausnehmen der Verdampfungsschale, Durchführen von Wiegen nach dem Kühlen für 0.5 Stunden, und Aufzeichnen eines Gewichts als a1; und Erhalten des Gehalts der Stoffe mit niedrigem Molekulargewicht als (a1-a0)/w× 100%.

2. Polyester nach Anspruch 1, **dadurch gekennzeichnet, dass** der Gesamtgehalt der Stoffe mit niedrigem Molekulargewicht im Polyester 0.2-0.35 Gew.-% beträgt, und die GPC-Kurve der Stoffe mit niedrigem Molekulargewicht das folgende Merkmal hat: die integrale Fläche der Peaks, die das zahlenmittlere Molekulargewicht (Mn) größer als 400 haben, weniger ist als 50% der gesamten integralen Fläche.

3. Polyester nach Anspruch 1, **dadurch gekennzeichnet, dass** die erste Komponente A Succinylsäure, oder Esterderivate davon oder Anhydridderivate davon umfasst.

4. Polyester nach Anspruch 1, **dadurch gekennzeichnet, dass** der Polyester ferner eine dritte Komponente C umfasst, und die Komponente C eine Verbindung ist, die zumindest drei Funktionsgruppen enthält; und aufgrund der gesamten Molarmenge der ersten Komponente A, ein Gehalt der dritten Komponente C 0.01-1.0 Mol-%, vorzugsweise 0.02-0.2 Mol-% ist.

5. Polyester nach Anspruch 4, **dadurch gekennzeichnet, dass** die Komponente C aus einer bzw. einem oder mehreren von folgenden ausgewählt ist: Weinsäure, Zitronensäure, Apfelsäure, Fumarsäure, Maleinsäure, Trimethylolpropan, Trimethylolethan, Pentaerythrit, Polyethertriol, Glycerol, 1,3,5-Benzoltricarbonsäure, 1,2,4-Benzoltricarbonsäure, 1,2,4-Benzoltricarbonanhydrid, 1,2,4,5-Benzoltetracarbonsäure, oder Pyromellitdianhydrid, vorzugsweise einer bzw. einem oder mehreren von Apfelsäure, Zitronensäure, Fumarsäure, Maleinsäure oder Glycerol.

6. Polyester nach Anspruch 1, **dadurch gekennzeichnet, dass** der Polyester ferner eine vierte Komponente D umfasst, und die vierte Komponente D ein Kettenverlängerer ist; und aufgrund der gesamten Molarmenge der ersten Komponente A, ein Gehalt der vierten Komponente D 0.01-5.0 Mol-% ist.

7. Polyester nach Anspruch 6, **dadurch gekennzeichnet, dass** die vierte Komponente D aus einem oder mehreren von folgenden ausgewählt ist: einem Isocyanat, einem Isocyanurat, einem Peroxid, einem Epoxid, Oxazolin, Oxazin, Lactam, Carbodiimid und Polycarbodiimid enthaltend 2 oder mehr als 2 Funktionsgruppen, vorzugsweise einem Isocyanat enthaltend 2 oder mehr als 2 Funktionsgruppen, und noch bevorzugter Hexamethylendisocyanat.

8. Polyester nach Anspruch 1, **dadurch gekennzeichnet, dass** eine Viskosität des Polyesters, die in einer Phenol/o-Dichlorbenzol-Lösung bei einem Gewichtsverhältnis von 1:1 unter einem Konstanttemperatur-Wasserbad bei 25±0.05°C wie gemäß GB/T 17931-1999 spezifiziert bestimmt wird, 100-350 ml/g ist.

9. Herstellungsverfahren für den Polyester nach einem der Ansprüche 1-8, **dadurch gekennzeichnet, dass** das Herstellungsverfahren die folgenden Schritte umfasst: S1: Mischen der ersten Komponente A, der zweiten Komponente B und eines Teils eines Katalysators, und Durchführen von Heizen in einem Esterifizierungsreaktor auf 180-260°C, um eine Esterifizierungsreaktion für 1-4 Stunden durchzuführen, um ein Esterifizierungsprodukt AB zu erhalten;
S2: Ermöglichen, dass das Esterifizierungsprodukt AB im Schritt S1 einer primären Polykondensationsreaktion bei einer Reaktionstemperatur von 200-240°C für eine Reaktionszeit von 2-6 Stunden unterzogen wird, um ein primäres Polykondensationsprodukt Pre-AB zu erhalten; und
S3: Überführen des primären Polykondensationsproduktes Pre-AB, das im Schritt S2 erhalten wird, und des verbleibenden Katalysators zu einem Endpolymerisationsreaktor, um eine kontinuierliche Polykondensationsreaktion bei einer Temperatur von 210-270°C durchzuführen, bis ein Reaktionsprodukt, das in einer Phenol/o-Dichlorbenzol-Lösung bei einem Gewichtsverhältnis von 1:1 unter einem Konstanttemperatur-Wasserbad bei 25±0.05°C wie gemäß GB/T 17931-1999 spezifiziert bestimmt wird, eine Viskosität von 100-350 ml/g erreicht;
worin eine Zusatzmenge des Katalysators im Schritt S1 10-40 Gew.-% einer gesamten Verwendungsmenge des Katalysators ist, und eine Zusatzmenge des Katalysators im Schritt S3 60-90 Gew.-% der gesamten Verwendungsmenge des Katalysators ist.

10. Herstellungsverfahren für den Polyester nach Anspruch 9, **dadurch gekennzeichnet, dass** der Katalysator eine bzw. eines oder mehrere von folgenden umfasst: einer Zinnverbindung, einer Antimonverbindung, einer Kobaltverbindung, einer Bleiverbindung, einer Zinkverbindung, einer Aluminiumverbindung oder einer Titanverbindung, vorzugsweise eine oder mehrere von einer Zinkverbindung, einer Aluminiumverbindung oder einer Titanverbindung, und noch bevorzugter Tetrabutylorthotitanat und/oder Tetraisopropylorthotitanat.

11. Polyesterformzusammensetzung, **dadurch gekennzeichnet, dass**, mittels Gewichtsprozents berechnet, die Polyesterformzusammensetzung die folgenden Komponenten umfasst:
5-95 Gew.-% des Polyesters nach einem der Ansprüche 1-8;
5-95 Gew.-% eines Zusatzstoffes und/oder anderer Polymere; und
0-70 Gew.-% eines Verstärkungsmaterials und/oder eines Füllstoffes.

12. Verwendung des Polyesters nach einem der Ansprüche 1-8 in der Herstellung von kompostierbaren abbaubaren Produkten, **dadurch gekennzeichnet, dass** die kompostierbaren abbaubaren Produkte Fasern, Filme oder Behälter umfassen.

13. Verwendung des Polyesters nach einem der Ansprüche 1-8 in der Herstellung von Saugrohren.

## Revendications

1. Polyester, comprenant un motif répétitif issu des composants suivants :
un premier composant A, par rapport à une quantité molaire totale du premier composant A, comprenant :
a1) 81-100% en moles, de préférence 90-100% en moles d'acide succinique, ou de dérivés ester de celui-ci ou de dérivés anhydride de celui-ci ;
a2) 0-19% en moles, de préférence 0-10% en moles d'autres acides binaires carboxyliques hormis l'acide succinique, ou de dérivés ester de ceux ou de dérivés anhydride de ceux-ci ;
un deuxième composant B, le 1,4-butanediol ;
**caractérisé en ce que**, par rapport à un poids total du polyester, une teneur totale en substances de faible poids moléculaire dans le polyester est de 0.1-0.6% en poids, de préférence 0.2-0.5% en poids, et une courbe GPC des substances de faible poids moléculaire présente la caractéristique suivante :
une aire intégrale de pics présentant un poids moléculaire moyen en nombre (Mn) supérieur à 400 est inférieure à 60% d'une aire intégrale totale et dans lequel la mesure GPC est effectuée selon le procédé défini dans la description ; et
la teneur totale en substances de faible poids moléculaire est testée selon le procédé suivant :
le pesage de 10 g de particules de polyester, et la consignation d'une masse des particules de polyester en p ; le placement des particules de polyester dans 100 ml d'éthanol pour chauffage et reflux pendant 4 h, la réalisation d'une filtration à chaud pour obtenir un filtrat, le déversement du filtrat dans une capsule d'évaporation pesée à l'avance, et la consignation d'un poids de la capsule d'évaporation en a0 ; le placement du filtrat obtenu sur un bain-marie pour évaporation à presque sec, le transfert de la capsule d'évaporation dans un four pour séchage à 105 °C pendant 2 h, puis la sortie de la capsule d'évaporation, la réalisation le pesage après refroidissement pendant 0.5 h, et la consignation d'un poids en a1 ; et l'obtention de la teneur en substances de faible poids moléculaire selon (a1-a0)/p× 100 %.

2. Polyester selon la revendication 1, **caractérisé en ce que** la teneur totale en substances de faible poids moléculaire dans le polyester est de 0.2-0.35 % en poids, et la courbe GPC des substances de faible poids moléculaire présente la caractéristique suivante : l'aire intégrale des pics présentant le poids moléculaire moyen en nombre (Mn) supérieur à 400 est inférieure à 50% de l'aire intégrale totale.

3. Polyester selon la revendication 1, **caractérisé en ce que** le premier composant A comprend de l'acide succinique, ou des dérivés ester de celui-ci ou des dérivés anhydrides de celui-ci.

4. Polyester selon la revendication 1, **caractérisé en ce que** le polyester comprend en outre un troisième composant C, et le composant C est un composé contenant au moins trois groupes fonctionnels ; et par rapport à la quantité molaire totale du premier composant A, une teneur en troisième composant C est de 0.01-1.0 % en moles, de préférence de 0.02-0.2 % en moles.

5. Polyester selon la revendication 4, **caractérisé en ce que** le composant C est un ou plusieurs éléments sélectionnés parmi l'acide tartrique, l'acide citrique, l'acide malique, l'acide fumarique, l'acide maléique, le triméthylolpropane, le triméthyloléthane, le pentaérythritol, le polyéther triol, le glycérol, l'acide 1,3,5-benzène tricarboxylique, l'acide 1,2,4-benzène tricarboxylique, l'anhydride 1,2,4-benzène tricarboxylique, l'acide 1,2,4,5-benzène tétracarboxylique et le dianhydride pyromellitique, et de préférence un ou plusieurs éléments parmi l'acide malique, l'acide citrique, l'acide fumarique, l'acide maléique ou le glycérol.

6. Polyester selon la revendication 1, **caractérisé en ce que** le polyester comprend en outre un quatrième composant D, et le quatrième composant D est un allongeur de chaîne ; et par rapport à la quantité molaire totale du premier composant A, une teneur en quatrième composant D est de 0.01-5.0% en moles.

7. Polyester selon la revendication 6, **caractérisé en ce que** le quatrième composant D est un ou plusieurs éléments sélectionnés parmi un isocyanate, un isocyanurate, un peroxyde, un époxyde, une oxazoline, une oxazine, un lactame, un carbodiimide et un polycarbodiimide contenant 2 ou plus de 2 groupes fonctionnels, de préférence un isocyanate contenant 2 ou plus de 2 groupes fonctionnels, et plus préférablement l'hexaméthylène diisocyanate.

8. Polyester selon la revendication 1, **caractérisé en ce qu'**une viscosité du polyester déterminée dans une solution de phénol/o-dichlorobenzène selon un rapport pondéral de 1/1 dans un bain-marie à température constante de 25±0.05 °C, tel que spécifié conformément à la norme GB/T 17931-1999, est de 100-350 ml/g.

9. Procédé de préparation du polyester selon l'une quelconque des revendications 1-8, **caractérisé en ce que** le procédé de préparation comprend les étapes suivantes : S1 : le mélange du premier composant A, du deuxième composant B et d'une partie d'un catalyseur, et la réalisation du chauffage dans un réacteur d'estérification à 180-260 °C pour mettre en œuvre une réaction d'estérification pendant 1-4 h afin d'obtenir un produit d'estérification AB ;
S2 : le fait de permettre au produit d'estérification AB de l'étape S1 de passer par une réaction de polycondensation primaire à une température de réaction de 200-240 °C pendant un temps de réaction de 2-6 h afin d'obtenir un produit de polycondensation primaire Pre-AB ; et
S3 : le transfert du produit de polycondensation primaire Pre-AB obtenu à l'étape S2 et du catalyseur restant dans un réacteur de polymérisation final pour effectuer une réaction de polycondensation continue à une température de 210-270 °C jusqu'à ce qu'un produit de réaction déterminé, dans une solution de phénol/o-dichlorobenzène selon un rapport pondéral de 1/1 sous un bain-marie à température constante de 25±0.05 °C, tel que spécifié conformément à la norme GB/T 17931-1999, atteigne une viscosité de 100-350 ml/g ;
dans lequel une quantité d'addition du catalyseur à l'étape S1 correspond à 10-40% en poids d'une quantité totale utilisée du catalyseur, et une quantité d'addition du catalyseur à l'étape S3 correspond à 60-90% en poids de la quantité totale utilisée du catalyseur.

10. Procédé de préparation du polyester selon la revendication 9, **caractérisé en ce que** le catalyseur comprend un ou plusieurs éléments parmi un composé d'étain, un composé d'antimoine, un composé de cobalt, un composé de plomb, un composé de zinc, un composé d'aluminium ou un composé de titane, de préférence un ou plusieurs éléments parmi un composé de zinc, un composé d'aluminium ou un composé de titane, et plus préférentiellement l'orthotitanate de tétrabutyle ou l'orthotitanate de tétraisopropyle.

11. Composition de moulage polyester, **caractérisée en ce que**, calculée en pourcentage en poids, la composition de moulage polyester comprend les composants suivants :
5-95% en poids du polyester selon l'une quelconque des revendications 1-8 ;
5-95% en poids d'un additif et/ou d'autres polymères ; et
0-70% en poids d'un matériau de renforcement et/ou d'une charge.

12. Utilisation du polyester selon l'une quelconque des revendications 1-8 dans la préparation de produits dégradables compostables, **caractérisée en ce que** les produits dégradables compostables comprennent des fibres, des films ou des récipients.

13. Utilisation du polyester selon l'une quelconque des revendications 1-8 dans la préparation de tubes d'aspiration.
